Europäisches Patentamt

European Patent Office

Office européen des brevets

(19)

(11) Numéro de publication : **0 375 539 B1**

# (12) FASCICULE DE BREVET EUROPEEN

(45) Date de publication du fascicule du brevet :
**22.02.95 Bulletin 95/08**

(51) Int. Cl.⁶ : **H04N 7/167**

(21) Numéro de dépôt : **89403552.6**

(22) Date de dépôt : **19.12.89**

(54) **Procédé d'embrouillage et de désembrouillage de signaux vidéo composites et dispositif de mise en oeuvre.**

(30) Priorité : **23.12.88 FR 8817092**

(43) Date de publication de la demande :
**27.06.90 Bulletin 90/26**

(45) Mention de la délivrance du brevet :
**22.02.95 Bulletin 95/08**

(84) Etats contractants désignés :
**AT BE CH DE ES FR GB GR IT LI LU NL SE**

(56) Documents cités :
**EP-A- 0 132 007**
**WO-A-84/00656**
**GB-A- 2 151 886**

(73) Titulaire : **LABORATOIRE EUROPEEN DE RECHERCHES ELECTRONIQUES AVANCEES**
**9, Place des Vosges**
**La Défense 5**
**F-92400 Courbevoie (FR)**

(72) Inventeur : **Leduc, Michel**
**THOMSON-CSF**
**SCPI**
**Cédex 67**
**F-92045 Paris la Défense (FR)**
Inventeur : **Renard, Francis**
**THOMSON-CSF**
**SCPI**
**Cédex 67**
**F-92045 Paris la Défense (FR)**
Inventeur : **Hamon, Joel**
**THOMSON-CSF**
**SCPI**
**Cédex 67**
**F-92045 Paris la Défense (FR)**
Inventeur : **Guillon, Jean-Claude**
**THOMSON-CSF**
**SCPI**
**Cédex 67**
**F-92045 Paris la Défense (FR)**
Inventeur : **Diehl, Eric**
**THOMSON-CSF**
**SCPI**
**Cédex 67**
**F-92045 Paris la Défense (FR)**

(74) Mandataire : **Ruellan-Lemonnier, Brigitte et al**
**THOMSON CONSUMER ELECTRONICS**
**9 Place des Vosges**
**La Défence 10**
**F-92400 Courbevoie (FR)**

EP 0 375 539 B1

## Description

La présente invention se rapporte à un procédé d'embrouillage et de désembrouillage de signaux vidéo composites, et à un dispositif de mise en oeuvre.

Les procédés actuellement mis en oeuvre pour embrouiller des signaux vidéo, en particulier dans le domaine de la télévision à péage, ont pour particularité de transmettre d'une part des messages d'accès, valables pour tous les récepteurs, simultanément avec les signaux vidéo, et d'autre part de transmettre périodiquement des messages d'autorisation spécifiques à chaque récepteur par une voie différente, par exemple par le poste ou par voie téléphonique. Du fait de leur mode de transmission, la périodicité de transmission de ces messages d'autorisation ne peut être que relativement grande, par exemple d'un mois. Une période aussi longue peut être facilement mise à profit par des "pirates" qui disposent ainsi de suffisamment de temps pour retrouver la clé d'embrouillage et pour en profiter. D'autre part, ce procédé connu ne permet pas de ne payer un abonnement que pour une partie des programmes diffusés sur une chaîne de télévision à péage si l'on n'est pas intéressé par la totalité de ces programmes. Les documents WO-A-8400656 et GB-A-2 151 886 décrivent des systèmes d'embrouillage de signaux vidéo.

La présente invention a pour objet un procédé d'embrouillage et de désembrouillage de signaux de vidéo composite dont la clé de désembrouillage soit pratiquement impossible à retrouver sans moyens très coûteux, et qui permette tous les modes d'abonnement connus, y compris le type d'abonnement dit "pay per view" (programme à la carte).

La présente invention a également pour objet un dispositif de mise en oeuvre de ce procédé.

Le procédé d'embrouillage et de désembrouillage de signaux vidéo composites conforme à l'invention, selon lequel l'embrouillage est commandé par une séquence pseudo-aléatoire, le désembrouillage étant commandé par une séquence pseudo-aléatoire identique à et synchronisée avec celle d'embrouillage, la séquence pseudo-aléatoire étant élaborée par un générateur de séquences pseudo-aléatoires et dépendant d'un mot de contrôle dont la valeur chiffrée est incorporée au signal vidéo, est **caractérisé par le fait** que l'on inclut dans les lignes inutilisées d'au moins une partie du signal émis des paquets de données numériques dont une donnée permet de sélectionner dynamiquement la période de chargement dudit mot de contrôle dans ledit générateur de séquences pseudo-aléatoires.

Selon un aspect du procédé de l'invention, les données fournies au récepteur des signaux vidéo doivent être celles contenues dans une carte à microprocesseur.

Selon un autre aspect du procédé de l'invention, ladite combinaison se fait à l'aide d'un procédé combinatoire dont la sécurité de protection contre un décryptage non autorisé augmente en fonction du nombre de fois où il est utilisé, en particulier un procédé interactif d'identification d'une signature numérique, avantageusement un procédé utilisant l'algorithme de Shamir.

Le dispositif d'embrouillage et de désembrouillage de signaux vidéo composites conforme à l'invention est utilisé dans un système de transmission d'images comportant un émetteur et des récepteurs, la partie embrouillage du système étant, commandé par une séquence pseudo-aléatoire générée par un générateur de séquences pseudo aléatoires et dépendant d'un mot de contrôle dont la valeur chiffrée est incorporée au signal vidéo, et comprenant des moyens d'insertion dans le signal vidéo de données définissant la période de chargement du mot de contrôle dans un générateur de séquences pseudo-aléatoires d'un récepteur des dits signaux, la dite période étant sélectionnée dynamiquement, et la partie désembrouillage comprenant, dans chaque récepteur un décodeur avec des moyens d'extraction d'une donnée des signaux reçus, la dite donnée définissant la période de chargement du mot de contrôle dans un générateur pseudo-aléatoire par des moyens de contrôle du dit générateur pseudo-aléatoire.

Selon une caractéristique avantageuse de l'invention, la liaison, dans chaque décodeur, entre l'unité de commande et le vérificateur de codes est une liaison parallèle.

La présente invention sera mieux comprise à la lecture de la description détaillée d'un mode de réalisation, pris comme exemple non limitatif, illustré par le dessin annexé sur lequel :

- la figure 1 est un bloc-diagramme simplifié d'un émetteur de programmes de télévision à péage embrouillés selon le procédé de l'invention et d'un des récepteurs recevant ces programmes et comportant un dispositif de désembrouillage correspondant,
- la figure 2 est un chronogramme de signaux montrant la disposition des différentes données nécessaires au désembrouillage par rapport à certaines des premières lignes des images émises par l'émetteur de la figure 1,
- la figure 3 est un chronogramme montrant la structure des paquets de données émis par l'émetteur de la figure 1 sur une période de 10,24 secondes, et
- les figures 4 et 5 sont des chronogrammes de signaux échangés dans un décodeur conforme à l'invention.

Le système de diffusion de programmes de télévision à péage décrit ci-dessous se rapporte à un standard de diffusion européen à 25 images complètes par seconde, mais il est bien entendu qu'il peut s'appliquer à tout autre standard en y apportant des modifications évidentes pour l'homme du métier. Par ailleurs, il est bien entendu que les émissions peuvent n'être embrouillées que pour certains programmes et être diffusées en clair pour les autres programmes.

L'émetteur et le récepteur de télévision 1 ne sont décrits que succinctement ci-dessous, car la plupart de leurs circuits sont bien connus en soi. Seuls font partie de l'invention, dans l'émetteur les circuits de production de paquets de messages d'accès, et les circuits d'insertion de ces paquets de données dans certaines des lignes des images à embrouiller, et dans le récepteur les circuits de désembrouillage.

L'émetteur 1 comporte une source d'images fournissant des signaux en vidéo composite. Sa sortie est reliée par l'intermédiaire d'un convertisseur analogique-numérique 3 à un circuit intermédiaire embrouilleur de vidéo 4 de type connu en soi. Ce circuit 4 est commandé par une unité de commande 5 via un générateur de séquences pseudo-aléatoires 6, et il envoie à cette unité centrale des signaux de synchronisation correspondant aux signaux vidéo. Le circuit 4 est relié via un convertisseur numérique-analogique 7 à un émetteur de puissance 8 dont l'antenne d'émission est référencée 9.

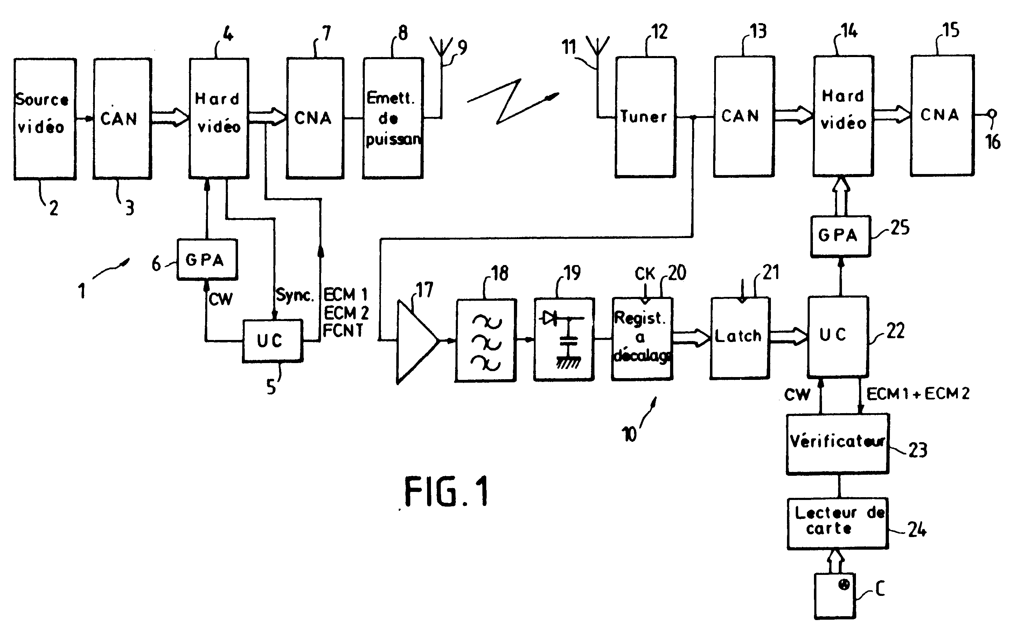

Sur la figure 1, on a représenté le bloc-diagramme de l'un des récepteurs de télévision pouvant recevoir les émissions de l'émetteur 1 et muni de circuits de désembrouillage conformes a l'invention. Ce récepteur est référencé 10. Le récepteur 10 comporte une antenne de réception 11 reliée à un syntoniseur ("tuner" en anglais) 12 suivi d'un convertisseur analogique-numérique 13, d'un circuit numérique désembrouilleur vidéo 14, et d'un convertisseur numérique-analogique 15 à la sortie 16 duquel on recueille les signaux vidéo désembrouillés.

La sortie du circuit 12 est également reliée, via un amplificateur 17, un filtre 18 et un détecteur de valeur de crête 19, à l'entrée série d'un registre à décalage 20. Les sorties parallèles du registre 20 sont reliées, via un registre-tampon 21, aux entrées de données d'un calculateur à microprocesseur 22, par exemple un microprocesseur de type EF6805.

Le calculateur 22 est relié bi-directionnellement à un vérificateur de code de sécurité 23. Ce vérificateur 23 est relié à un lecteur 24 de "cartes à puce" (cartes à microprocesseur connues également sous l'appellation de "smart card"). Le calculateur 22 est également relié à un générateur de séquences pseudo-aléatoires 25, lui-même relié au circuit 14.

Dans l'émetteur 1, les signaux vidéo issus de la source 2 et numérisés par le convertisseur 3 sont embrouillés dans le circuit 4 sous la commande de séquences de signaux pseudo-aléatoires produites par le générateur 6. Chacun des nombres binaires successifs d'une séquence apparaissant en synchronisme avec les lignes successives du signal vidéo, détermine un point de coupure dans la ligne correspondante, ce point de coupure pouvant être situé à n'importe quel endroit de la ligne. L'embrouillage consiste à permuter les parties de la ligne situées de part et d'autre de ce point de coupure. Ce procédé d'embrouillage, dit "par permutation de ligne" étant bien connu en soi, ne sera pas décrit plus en détail.

Les séquences du générateur pseudo-aléatoire 6 ont un cycle relativement court : 2,56, 5,12 ou 10,24 secondes. Le cycle de 2,56 s est particulièrement intéressant pour limiter le temps d'accrochage du décodeur à la mise sous tension. Les différentes valeurs de séquences mentionnées ci-dessus sont sélectionnées dynamiquement dans l'émetteur. Ces séquences sont commandées par l'unité de commande 5 en fonction d'un message d'accès au programme, appelé ici ECM (de "Entitlement Checking Message"), commun à tous les récepteurs. Dans les systèmes connus de télévision à péage, les messages d'autorisation sont communiqués aux abonnés par poste, par modem, ou par toute autre voie de télécommunication. Les messages d'accès ne peuvent donc être modifiés qu'à des intervalles de temps relativement longs (quelques semaines en général), ce qui permet à des "pirates" de les retrouver (on estime que ces messages peuvent être retrouvés en 1 à 2 jours), bien avant leur modification suivante.

Selon la présente invention, l'unité de commande 5 de l'émetteur inclut dans la vidéo composite (à l'entrée du convertisseur 7) des messages d'accès. Cette unité centrale 5 assure, entre autres, une fonction de compteur d'images (FCNT). Ce compteur est incrémenté d'une unité toutes les deux trames, c'est-à-dire à chaque image complète (toutes les 40 ms pour un standard à 50 Hz à trames entrelacées), grâce aux tops d'images du signal vidéo envoyés par le circuit 4. Dans le cas présent, ce compteur a un état maximal de comptage égal à 255 (compteur à 8 bits). Après avoir atteint cet état maximal, le compteur repasse à zéro, et permet la synchronisation des mots de contrôle (CW, de "Control Word") dont la version encryptée est ledit message d'accès. Ce mot de commande peut avoir par exemple une longueur de 60 bits, et il est choisi aléatoirement. Ce mot de commande détermine un nouveau cycle du générateur 6.

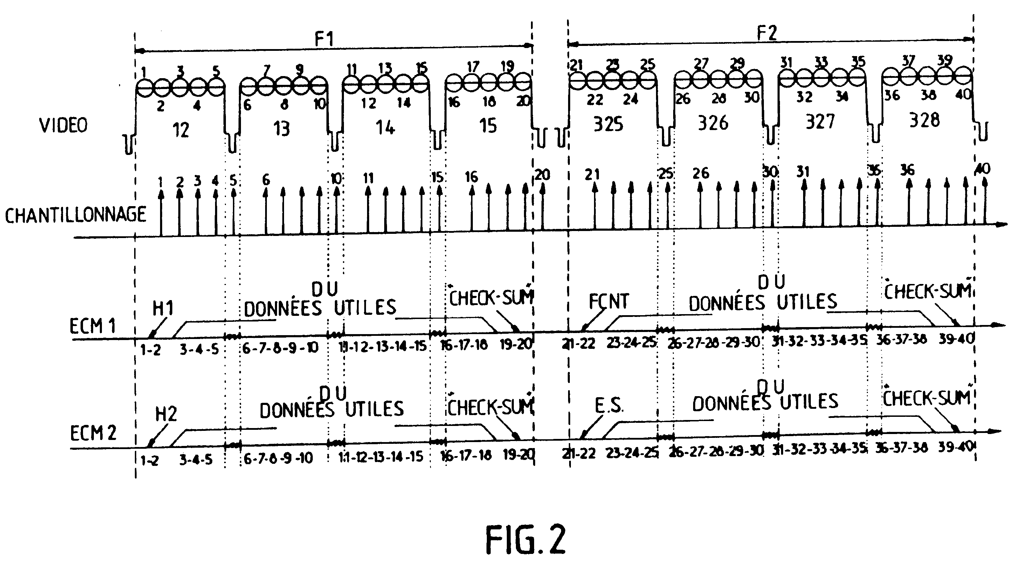

Par ailleurs, l'unité de commande 5 envoie au circuit 7 à des instants déterminés les informations suivantes : l'état du compteur (FCNT), des en-têtes de messages d'accès (H1 et H2), des données concernant l'état du système de transmission (embrouillé ou non, accès libre ou à péage, débit des données des messages), et des données de contrôle ("check num" ou CRC par exemple). L'unité centrale envoie ces informations pendant l'émission de lignes non utilisées par l'image. Selon le standard CCETT à 625 lignes, il existe des lignes inutilisées par l'image visible avant la 23ème ligne et après la 310è ligne. Dans le présent exemple, on utilise pour le codage quatre de ces lignes non prises par l'image, par exemple les lignes 12 à 15, pour le champ F1 et les lignes 325 à 328 pour le champ F2 comme représenté en figure 2. A chacune de ces lignes, pendant la durée utile de la ligne, l'unité centrale envoie cinq octets de données de codage, soit 40 bits par ligne et 20 octets pour chaque champ de quatre lignes. Les zéros binaires correspondent au niveau du noir, et les "1" au niveau du blanc. Ainsi au début de chaque image complète (toutes les 40 ms dans l'exemple précité), un paquet de données (de 40 octets) est incorporé au signal vidéo composite émis par l'émetteur 1.

Deux sortes différentes de paquets de données sont émises : ECM1 et ECM2. Un exemple de structure de chacun de ces types de paquets a été représenté en figure 2. Avantageusement, ces paquets de données sont codés par exemple en code de Hamming 8-4, de façon être mieux immunisés contre les parasites de transmission. Selon une variante de l'invention, les différents octets de chaque paquet peuvent être entrelacés au sein de ce paquet pour améliorer l'immunité aux parasites. Bien entendu, ils sont tout d'abord désentrelacés en correspondance dans chaque décodeur.

Dans le chronogramme de la figure 2, les différents paquets ECM1 et ECM2 comportent un en-tête d'identification H1 et H2 respectivement. Ces en-têtes permettent de discriminer les paquets ECM1 des paquets ECM2 avec la relation suivante :

$$(Q_H + Q_L)_{ECM1} = \overline{(Q_H + Q_L)}_{ECM2} = F_{hexa}$$

relation dans laquelle QH et $Q_L$ sont des quartets de l'en-tête.

Par exemple si H1 = A5$_{hexa}$ pour ECM1, on doit avoir H2 = 5A$_{hexa}$ pour ECM2, et on vérifie que A + 5 = F$_{hexa}$

Les paquets de données ECM1 et ECM2 comportent ensuite pour le champ F1 seize octets DU de données utiles pour le vérificateur, deux octets de "check sum" puis, pour le champ F2 : deux octets pour FCNT, seize octets DU de données utiles pour le vérificateur, et deux octets de "check sum". Pour ECM2, les données FCNT sont remplacées par des données ES d'état du système.

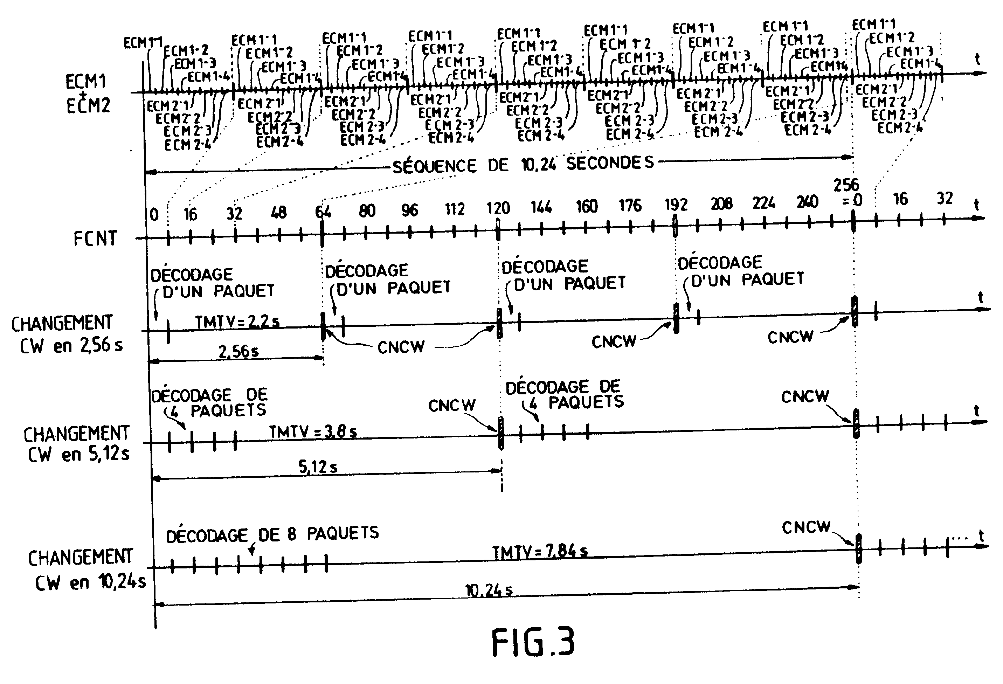

On a représenté en figure 3, sur la deuxième ligne, un cycle de comptage du compteur d'images FCNT de 0 à 255, c'est-à-dire pour une période de temps de 10,24 secondes. Pendant ce temps, l'unité centrale 5 produit continuellement les valeurs ECM1 et ECM2 alternées et répétées de la façon représentée sur la première ligne de la figure 3. Pour un cycle de FCNT, l'unité centrale 5 peut produire huit paquets comportant chacun quatre fois ECM1 puis quatre fois ECM2 par paquet. Sur cette figure 3, les abréviations CNCW et TMTV signifient respectivement "chargement d'un nouveau mot de contrôle CW" et "temps maximal traitement du vérificateur".

Pendant cette période de FCNT, on peut changer le mot de code CW quatre fois, ou deux ou une, c'est-à-dire selon une période de 2,56 s, 5,12 s ou 10,24 s respectivement, comme représenté sur les 3è, 4è et 5è lignes de la figure 3.

Dans le premier cas (période de 2,56 s), l'unité centrale 5 envoie à chaque période de 2,56 s au minimum un paquet de décodage, ce qui laisse au vérificateur 23 un temps maximal de 2,2 s pour effecter son traitement avant le chargement du mot de code suivant. Dans le second cas, l'unité centrale 5 envoie au minimum quatre paquets de décodage à chaque période de 5,12 s, ce qui laisse au vérificateur un temps maximal de traitement de 3,8 s. Dans le troisième cas, l'unité centrale 5 envoie au minimum 8 paquets de décodage à chaque période de 10,24 s, ce qui laisse au vérificateur un temps de traitement maximal de 7,84 s. Ces différentes valeurs de périodes sont fournies par les données de l'octet E.S.

Dans chaque récepteur, tel que le récepteur 10 représenté en figure 1, le signal composite recueilli à la sortie du circuit 12 est amplifié, filtré, détecté (en 17,18 et 19 respectivement) et les octets successifs de données ainsi détectés sont transmis à l'unité centrale via le tampon 21. Le remplissage du registre à décalage 20 se fait au rythme des signaux d'horloge (CK) produits par l'unité centrale 22.

Bien entendu, les données arrivant à l'unité centrale 22 depuis le registre 21 sont : ECM1 et ECM2. Lorsque l'unité centrale 22 reconnaît des paquets ECM1 ou ECM2 (d'après leur en-tête H1 ou H2), elle extrait de ECM1 la valeur FCNT qui lui sert à corriger, le cas échéant, l'état de comptage de son compteur d'images (sous-programmes de cette unité centrale). L'unité centrale 22 utilise une roue libre pour produire FCNT et la verrouille sur les octets 21 et 22 de la ligne 325 donnant la valeur courante vraie de FCNT, qui est avantageusement codée en code de Hamming.

L'état zéro du compteur d'images (qui revient toutes les 40 ms) détermine les phases de traitement des paquets par l'unité centrale et de chargement du générateur pseudo-aléatoire. Les fenêtres actives du générateur pseudo-aléatoire se produisent pendant les lignes utiles de l'image, c'est-à-dire, pour un standard (CCETT à 625 lignes, des lignes 23 à 310 et 336 à 623 (pour les 1ère et 2ème trames respectivement de chaque image). L'unité centrale 22 produit au moment de chaque passage à zéro de FCNT une boucle d'attente d'une durée d'environ 20 lignes pour être en mesure de recevoir les paquets de données qu'elle reçoit à partir de la ligne 12. Les fenêtres de réception de données s'étendent de la ligne 12 à la ligne 15 et de la ligne 325 à la ligne 328. Au-delà de ces fenêtres et à peu près jusqu'au prochain zéro de FCNT, l'unité centrale se consacre à traiter les paquets de données.

Le dialogue entre le processeur 22 et le vérificateur 23 se fait par envoi en parallèle (sur 1 octet) afin de minimiser le temps de traitement des messages et pouvoir l'effectuer en temps réel.

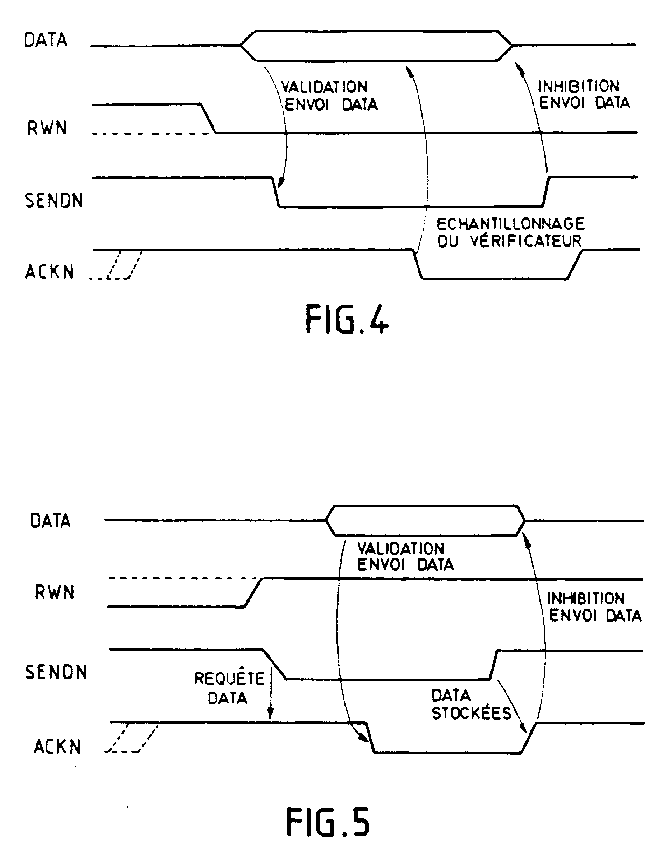

Outre les données utiles ("DATA") ECM1 et ECM2 (32 octets en tout dans un exemple), le processeur 22 envoie au vérificateur (voir figure 4) les données suivantes : RWN (écriture/lecture) et SENDN (chargement des données), et il en reçoit ACKN (accusé de réception).

Le vérificateur 23 envoie au processeur 22 (voir figure 5) outre le mot de contrôle CW sur 8 octets, les données suivantes : RWN (écriture/lecture) et SENDN (chargement des données), et en reçoit ACKN (accusé de réception).

Le vérificateur 23 combine les données ECM1 et ECM2 avec les données contenues dans la carte à microprocesseur C introduite par l'usager dans le lecteur 24. Le rôle du vérificateur est de contrôler la validité du traitement effectué à l'intérieur de la carte à microprocesseur tout en conservant un aspect confidentiel aux échanges de données entre ce vérificateur et le processeur 22 d'une part et entre le vérificateur et le lecteur 24 d'autre part.

Ladite combinaison peut être basée sur un principe interactif d'identification d'une signature numérique. Le dialogue encre la carte à microprocesseur et le vérificateur 23 doit permettre de vérifier que le décodeur possède bien la valeur secrète recherchée mais ceci sans la révéler réellement. Le principe de base consiste à dire que si le résultat d'un produit de factorisation de larges nombres est connu au niveau de chaque décodeur, il n'en reste pas moins difficile de connaître ces deux nombres. Par conséquent si on transmet $\sqrt{x}$ (mod(n)), ceci pouvant s'exprimer par une série de produits de facteurs avec des coefficients déterminés, il devient d'autant plus difficile de trouver ce nombre x. Pour pouvoir désembrouiller les émissions, le décodeur doit prouver sa connaissance de la valeur secrète $Y = \sqrt{x}$ (mod (n)) sans la révéler réellement. Ainsi le lecteur choisit un nombre aléatoire R puis calcule $T = R2$ (mod(x)) et envoie T au vérificateur qui choisit aléatoirement entre

1/ demander au lecteur de fournir R tel que $\sqrt{T} = R$ et vérifie que $R2 = T$ (mod(n))

2/ demander au lecteur de fournir $VTX = RY$ (mod(n))

$$\sqrt{Tx}/\sqrt{T} = \sqrt{x}$$

Donc on voit que le dialogue entre le vérificateur et le lecteur se résume à des transferts de nombres et que le calcul des racines carrées ou des carrés se fait suivant un temps donné et avec des coefficients déterminés. Ainsi les messages accessibles à un fraudeur entre la carte à microprocesseur et le décodeur ne lui permettent pas de décoder le message dans un temps compatible avec le fonctionnement du système ainsi défini sans une puissance de calcul extraordinaire mettant en oeuvre des moyens considérables, ce qui rend sans intérêt toute fraude car trop onéreuse.

## Revendications

1. Procédé d'embrouillage et de désembrouillage de signaux vidéo composites, l'embrouillage étant commandé par une séquence pseudo-aléatoire, le désembrouillage étant commandé par une séquence pseudo-aléatoire identique à et synchronisée avec celle d'embrouillage, la séquence pseudo-aléatoire étant élaborée par un générateur de séquences pseudo-aléatoires (25) et dépendant d'un mot de contrôle (cw) dont la valeur chiffrée est incorporée au signal vidéo, ledit procédé étant **caractérisé par le fait** que l'on inclut dans les lignes inutilisées d'au moins une partie du signal émis des paquets de données numériques (ECM1, ECM2) dont une donnée (ES) permet de sélectionner dynamiquement la période de chargement dudit mot de contrôle (CW) dans ledit générateur de séquences pseudo-aléatoires (25).

2. Procédé selon la revendication 1, **caractérisé en ce qu'**à la réception, l'on traite de façon confidentielle les données des paquets de données numériques (ECM1, ECM2) et des données contenues dans une carte à microprocesseur (C) de façon à obtenir ledit mot de contrôle (CW) déchiffré.

3. Procédé selon la revendication 2, **caractérisé par le fait que** la carte à microprocesseur (C) et un vérificateur (23) mettent en oeuvre un procédé interactif d'identification d'une signature numérique.

4. Procédé selon la revendication 3, **caractérisé en ce que** la carte à microprocesseur (C) et le vérificateur (23) utilisent l'algorithme de Shamir.

5. Dispositif d'embrouillage (1) de signaux vidéo, ledit embrouillage étant commandé par une séquence pseudo-aléatoire générée par un générateur de séquences pseudo aléatoires (6) et dépendant d'un mot de contrôle (CW) dont la valeur chiffrée est incorporée au signal vidéo, ledit dispositif mettant en oeuvre le procédé conforme aux revendications 1 à 4, **caractérisé en ce qu'**il comporte des moyens d'insertion (5) dans le signal vidéo de données (ES) définissant la période de chargement du mot de contrôle (CW) dans un générateur de séquences pseudo-aléatoires (25) d'un récepteur (10) des dits signaux, la dite période étant sélectionnée dynamiquement.

6. Dispositif de désembrouillage (10) de signaux vidéo dont l'embrouillage est commandé par une séquence pseudo-aléatoire générée par un générateur pseudo-aléatoire (6), la dite séquence

9 EP 0 375 539 B1 10

dépendant d'un mot de contrôle (CW) dont la valeur chiffrée est incorporée au signal vidéo, ledit dispositif mettant en oeuvre le procédé conforme à l'une des revendications 1 à 4, **caractérisé en ce qu'**il comporte des moyens (17 à 21) d'extraction d'une donnée (ES) des signaux reçus, la dite donnée définissant la période de chargement du mot de contrôle (CW) dans un générateur pseudo-aléatoire (25) par des moyens de contrôle (22) du dit générateur pseudo-aléatoire (25).

**Patentansprüche**

1. Verfahren zur Geheimverschlüsselung und Entschlüsselung von zusammengesetzten Videosignalen, wobei die Verschlüsselung von einer Pseudozufallsfolge gesteuert wird, während die Entschlüsselung von einer gleichen und mit der Verschlüsselung synchronisierten Pseudozufallsfolge gesteuert wird, die von einem Generator (25) für Pseudozufallsfolgen erzeugt wird und von einem Steuerwort (CW) abhängt, dessen Zahlenwert im Videosignal inkorporiert ist, dadurch gekennzeichnet, daß in die nicht verwendeten Zeilen mindestens eines Teils des ausgesendeten Signals digitale Datenpakete (ECM1, ECM2) eingefügt werden, von denen eine Angabe (ES) die dynamische Auswahl der Ladeperiode des Steuerworts (CW) im Generator (25) für die Pseudozufallsfolgen ermöglicht.

2. Verfahren nach Anspruch 1, dadurch gekennzeichnet, daß beim Empfang die Daten der digitalen Datenpakete (ECM1, EMC2) und Daten, die in einer IC-Karte (C) enthalten sind, vertraulich behandelt werden, so daß sich das entschlüsselte Steuerwort (CW) ergibt.

3. Verfahren nach Anspruch 2, dadurch gekennzeichnet, daß die IC-Karte (C) und eine Prüfeinheit (23) ein interaktives Identifikationsverfahren einer digitalen Signatur durchführen.

4. Verfahren nach Anspruch 3, dadurch gekennzeichnet, daß die IC-Karte (C) und die Prüfeinheit (23) den Shamir-Algorithmus verwenden.

5. Vorrichtung (1) zur Verschlüsselung von Videosignalen, wobei die Verschlüsselung durch eine Pseudozufallsfolge gesteuert wird, die von einem Generator (6) für Pseudozufallsfolgen erzeugt wird und von einem Steuerwort (CW) abhängt, dessen Zahlenwert in das Videosignal inkorporiert ist, zur Durchführung des Verfahrens gemäß den Ansprüchen 1 bis 4, dadurch gekennzeichnet, daß die Vorrichtung Mittel (5) aufweist, um in das Videosignal Daten (ES) einzufügen, welche die Ladeperiode des Steuerworts (CW) in einem Generator (25) von Pseudozufallsfolgen in einem Empfängers (10) der Signale definieren, wobei diese Periode dynamisch ausgewählt wird.

6. Vorrichtung (1) zur Entschlüsselung von Videosignalen, deren Verschlüsselung durch eine Pseudozufallsfolge gesteuert wird, die von einem Generator (6) für Pseudozufallsfolgen erzeugt wird, wobei diese Folge von einem Steuerwort (CW) abhängt, dessen Zahlenwert in das Videosignal inkorporiert ist, zur Durchführung des Verfahrens gemäß den Ansprüchen 1 bis 4, dadurch gekennzeichnet, daß die Vorrichtung Mittel (17 bis 21) aufweist, um eine Angabe (ES) aus den empfangenen Signalen zu entnehmen, die die Ladeperiode des Steuerworts (CW) in einem Pseudozufallsgenerator (25) über Steuermittel (22) des Pseudozufallsgenerators (25) definieren.

**Claims**

1. Scrambling and unscrambling method for composite video signals, the scrambling being controlled by a pseudo-random sequence, the unscrambling being controlled by a pseudo-random sequence identical to and synchronized with the one used for scrambling, the pseudo-random sequence being generated by a pseudo-random sequences generator (25) and depending on a control word (CW) whose encoded value is incorporated in the video signal, the said method being characterized in that there is included in the unused lines, of a least a portion of the transmitted signal, digital data packets (ECM1, ECM2) of which one item of data (ES) makes it possible to select dynamically the period of loading the said control word (CW) in the said pseudo-random sequences generator (25).

2. Method according to Claim 1, characterized in that, on reception, the data in the digital data packets (ECM1, ECM2) and data contained in a microprocessor card (C) are treated in a confidential manner in order to obtain the said control word (CW) decoded.

3. Method according to Claim 2, characterized in that the microprocessor card (C) and a checker (23) use an interactive method of identification of a digital signature.

4. Method according to Claim 3, characterized in that the microprocessor card (C) and the checker (23) use the Shamir algorithm.

5. Device (1) for scrambling video signals, the said scrambling being controlled by a pseudo-random sequence generated by a pseudo-random sequences generator (6) and depending on a control word (CW) whose encoded value is incorporated in the video signal, the said device using the method according to Claims 1 to 4, characterized in that it comprises means of insertion (5) in the video signal of data (ES) defining the period of loading the control word (CW) in a pseudo-random sequences generator (25) of a receiver (10) of the said signals, the said period being selected dynamically.

6. Device (10) for unscrambling video signals whose scrambling is controlled by a pseudo-random sequence generated by a pseudo-random generator (6), the said sequence depending on a control word (CW) whose encoded value is incorporated in the video signal, the said device using the method according to one of Claims 1 to 4, characterized in that it comprises means (17 to 21) of extraction of an item of data (ES) from the received signals, the said item of data defining the period of loading the control word (CW) in a pseudo-random generator (25) by means of control (22) of the said pseudo-random generator (25).

FIG.1

FIG.2

FIG.3

DATA

VALIDATION
ENVOI DATA

INHIBITION
ENVOI DATA

RWN

SENDN

ECHANTILLONNAGE
DU VÉRIFICATEUR

ACKN

# FIG.4

DATA

VALIDATION
ENVOI DATA

RWN

INHIBITION
ENVOI DATA

SENDN

REQUÊTE
DATA

DATA
STOCKÉES

ACKN

# FIG.5